(19) Europäisches Patentamt
European Patent Office
Office européen des brevets

(11) EP 1 260 530 A1

(12) **EUROPÄISCHE PATENTANMELDUNG**

(43) Veröffentlichungstag:
**27.11.2002 Patentblatt 2002/48**

(51) Int Cl.7: **C08F 220/18**, C08F 265/02, C08F 2/44

(21) Anmeldenummer: **02007981.0**

(22) Anmeldetag: **10.04.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **22.05.2001 DE 10125139**

(71) Anmelder: **BASF AKTIENGESELLSCHAFT**
**67056 Ludwigshafen (DE)**

(72) Erfinder:
- **Gerst, Matthias, Dr.**
  **67433 Neustadt (DE)**
- **Laubender, Matthias, Dr.**
  **67105 Schifferstadt (DE)**
- **Reck, Bernd, Dr,**
  **67269 Grünstadt (DE)**

# (54) Thermisch härtbare Bindemittel

(57) Die Erfindung betrifft ein Verfahren zur Herstellung einer wäßrigen Polymerdispersion, enthaltend

- ein Emulsionspolymerisat
- ein Polymerisat, welches zu mindestens 5 Gew.-% aus einer ethylenisch ungesättigten Monocarbonsäure, Dicarbonsäure oder Dicarbonsäureanhydrid aufgebaut ist (kurz Säurepolymer SP) und
- ein Alkoxysilan der Formel

$$SiR^1R^2R^3R^4$$

worin die Gruppen $R^1$ bis $R^4$ unabhängig voneinander für einen organischen Rest stehen, mit der Maßgabe, dass mindestens eine der Gruppen für eine Alkoxygruppe steht, dadurch gekennzeichnet, dass die Herstellung des Emulsionspolymerisats durch Emulsionspolymerisation in Gegenwart zumindest eines Teils des Alkoxysilans erfolgt.

EP 1 260 530 A1

## Beschreibung

Die Erfindung betrifft ein Verfahren zur Herstellung einer wäßrigen Polymerdispersion, enthaltend

- ein Emulsionspolymerisat (kurz EP)
- ein Polymerisat, welches zu mindestens 5 Gew.-% aus einer ethylenisch ungesättigten Monocarbonsäure, Dicarbonsäure oder Dicarbonsäureanhydrid aufgebaut ist (kurz Säurepolymer SP) und
- ein Alkoxysilan der Formel

$$SiR^1R^2R^3R^4$$

worin die Gruppen $R^1$ bis $R^4$ unabhängig voneinander für einen organischen Rest stehen, mit der Maßgabe, dass mindestens eine der Gruppen für eine Alkoxygruppe steht, dadurch gekennzeichnet, dass die Herstellung des Emulsionspolymerisats durch Emulsionspolymerisation in Gegenwart zumindest eines Teils des Alkoxysilans erfolgt.

Im weiteren betrifft die Erfindung wäßrige Polymerdispersionen, die nach dem Verfahren erhältlich sind und die Verwendung dieser Dispersionen als Bindemittel.

Thermisch härtbare Bindemittel aus Polycarbonsäuren und Polyolen bzw. Alkanolaminen sind z.B. aus der EP-A-445578, EP-A-583086, EP-A-882074, EP-A-882093 oder DE-A-19949592 (OZ 50804) bekannt.

In EP-A-882074 und DE-A-19949592 werden u.a. Alkoxysilane als mögliche Additive für derartige Bindemittel genannt.

Gegenüber bisher bekannten thermisch härtbaren Bindemitteln war Aufgabe der vorliegende Erfindung, die anwendungstechnischen Eigenschaften, insbesondere die Festigkeit der hergestellten Formkörper weiter zu verbessern. Gleichzeitig sollen die Bindemittel durch ein möglichst einfaches Verfahren erhältlich sein.

Demgemäß wurde das obige Verfahren gefunden. Gefunden wurden auch die nach dem Verfahren erhältlichen Bindemittel und ihre Verwendung.

Vorzugsweise besteht das Emulsionspolymerisat (EP) zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt, mit einer Doppelbindung z.B. Ethylen oder Propylen.

Als Hauptmonomere bevorzugt sind die $C_1$- bis $C_{10}$-Alkylacrylate und -methacrylate, insbesondere $C_1$- bis $C_8$-Alkylacrylate und -methacrylate. In Betracht kommen vorzugsweise auch Mischungen von $C_1$-$C_{10}$-Alkylacrylaten oder $C_1$-$C_{10}$-Alkylmethacrylaten mit Vinylaromaten, insbesondere Styrol.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das radikalisch polymerisierte Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z.B. auch Hydroxylgruppen enthaltende Monomere, insbesondere $C_1$-$C_{10}$-Hydroxyalkyl(meth)acrylate, (Meth)acrylamid.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl- (meth-)acrylat genannt.

Als weitere Monomere seien auch vernetzende Monomere genannt.

Weiterhin seien auch Monomere mit hydrolisierbaren Si-Gruppen genannt.

Der Anteil von Monomeren mit Carbonsäuregruppen oder Carbonsäureanhydridgruppen liegt im allgemeinen unter 5 Gew.-% insbesondere unter 3 Gew.-%, bezogen auf EP.

Die Herstellung von EP erfolgt durch Emulsionspolymerisation.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: $C_8$bis $C_{36}$), ethoxylierte Mono-, Di- und Tri-Alkylphenole (EO-Grad: 3 bis 50, Alkylrest: $C_4$- bis $C_9$), Alkalimetallsalze von Dialkylestern der Sulfobernsteinsäure sowie Alkali- und Ammoniumsalze von Alkylsulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$- bis $C_9$), von Alkylsulfonsäuren (Alkylrest: $C_{12}$- bis $C_{18}$) und von Alkylarylsulfonsäuren (Alkylrest: $C_9$- bis $C_{18}$).

Weitere geeignete Emulgatoren sind Verbindungen der allgemeinen Formel II

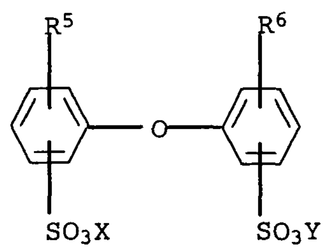

(II)

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax®2 A1, Emulan® NP 50, Dextrol® OC 50, Emulgator 825, Emulgator 825 S, Emulan® OG, Texapon®NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bioder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt ) erfolgen. Er richtet sich nach den für eine niedrige Viskosität angestrebten Teilchengrößenverteilung.

Das so hergestellte Polymer wird vorzugsweise in Form seiner wäßrigen Dispersion verwendet.

Die Glasübergangstemperatur des polymeren Bindemittels, bzw. des Emulsionspolymerisats beträgt vorzugsweise -60 bis +110°C, besonders bevorzugt -50 bis +100°C und ganz besonders bevorzugt -4° bis +100°C.

Die Glasübergangstemperatur läßt sich nach üblichen Methoden wie Differentialthermoanalyse oder Differential Scanning Calorimetrie (s. z.B. ASTM 3418/82, sog. "midpoint temperature") bestimmen.

Die wäßrige Polymerdisperion enthält neben dem Emulsionspolymerisat Alkoxysilane der Formel

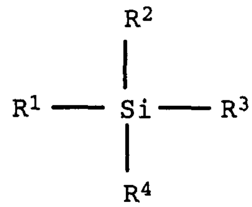

worin $R^1$ bis $R^4$ unabhängig voneinander für einen organischen Rest stehen, mit der Maßgabe, dass mindestens eine der Gruppen $R^1$-$R^4$ für eine Alkoxygruppe, insbesondere eine $C_1$-$C_8$-Alkoxygruppe, bevorzugt eine $C_1$-$C_4$-Alkoxygruppe steht. Besonders bevorzugt stehen zwei, drei oder alle der Gruppen $R^1$ bis $R^4$ für eine Alkoxygruppe, ganz besonders bevorzugt stehen zwei oder drei, insbesondere drei der Gruppen für eine Alkoxygruppe.

Als Alkoxygruppe kommt ganz besonders bevorzugt die Methoxygruppe in Betracht. Die übrigen Gruppen stehen für einen sonstigen organischen Rest, insbesondere einen organischen Rest, der bis zu 10 C-Atome und gegebenenfalls Heteroatom, wie O, N, S enthalten kann.

Insbesondere kann es sich um Alkylgruppen, vorzugsweise $C_1$-$C_8$-Alkyl-, besonders bevorzugt $C_1$-$C_4$-Alkylgruppen handeln.

Erfindungsgemäß wird die Emulsionspolymerisation von EP in Gegenwart zumindest eines Teils des Alkoxysilans durchgeführt.

Bevorzugt erfolgt die Emulsionspolymerisation in Gegenwart von mindestens 20 Gew.-%, besonders bevorzugt mindestens 50 Gew.-%, ganz besonders bevorzugt von 100 Gew.-% der Gesamtmenge des Alkoxysilans.

Das Alkoxysilan kann dazu vor Beginn der Emulsionspolymerisation der wäßrigen Emulsion der zu polymerisierenden Monomeren zugesetzt werden. Das Alkoxysilan kann auch während der Polymerisation zugesetzt werden.

Bevorzugt erfolgt die Zugabe der obigen Teilmenge, bzw. der Gesamtmenge, bevor 70 Gew.-%, besonders bevorzugt bevor 50 Gew.-% der Monomeren, aus denen EP aufgebaut ist, polymerisiert sind.

Die Menge des Alkoxysilans beträgt vorzugsweise 0,1 bis 10 Gew.-Teile besonders bevorzugt 0,2 bis 5 Gew. -Teile, bezogen auf 100 Gew.-Teile der Summe aus EP + SP (fest).

Die wäßrige Polymerdispersion enthält auch das eingangs definierte Säurepolymer SP.

SP ist ein radikalisch polymerisiertes Polymer, welches zu 5 bis 100 Gew.-%, vorzugsweise 20 bis 100 Gew.-%, besonders bevorzugt 40 bis 100 Gew.-% aus einer ethylenisch ungesättigten Säure oder einem ethylenisch ungesättigten Säureanhydrid aufgebaut ist.

Genannte seien insbesondere Acrylsäure oder Methacrylsäure, Maleinsäure, Fumarsäure, Itaconsäure, Maleinsäureanhydrid.

Besonders bevorzugt enthält SP Säureanhydride, z.B. Maleinsäureanhydrid oder Dicarbonsäuren, welche Anhydride bilden können, z.B. Maleinsäure.

Insbesondere enthalten die Polymeren SP 5 bis 50 Gew.-%, vorzugsweise 10 bis 40 Gew.-% der zuletzt genannten Dicarbonsäuren oder Säureanhydriden. Bei den übrigen ethylenisch ungesättigten Verbindungen aus denen das Polymer aufgebaut ist, handelt es sich vorzugsweise um Acrylsäure oder Methacrylsäure.

Die Säuren können grundsätzlich auch als Salze, z.B. Alkali- oder Ammoniumsalze vorliegen und eingesetzt werden. Ebenfalls geeignet sind Salze von Aminen.

Darüberhinaus kann das Polymer z:B. auch folgende Monomere als Aufbaukomponenten enthalten:

$C_1$-$C_8$-Alkyl(meth)acrylate, Vinylester, Vinylether, Olefine, Vinylhalogenide, ungesättigte Nitrile etc.

Die wäßrige Polymerdispersion enthält vorzugsweise auch noch ein Polyol als Vernetzungsmittel für das Polymer SP.

Bevorzugt handelt es sich dabei um niedermolekulare Verbindungen mit einem Molgewicht unter 2000 g/mol, insbesondere unter 1000 g/mol.

Bevorzugt sind 2 bis 5-wertige Polyole, wie Glycerin, Trimethylolpropan etc.

Besonders bevorzugt sind Alkanolamine. Genannt seien insbesondere Diethanolamin und Triethanolamin.

Insbesondere geeignet sind Polymere SP wie sie in EP-A-882074 beschrieben sind.

SP und Polyol-Vernetzer werden bevorzugt in einem solchen Verhältnis zueinander eingesetzt, daß das Molverhältnis von Carboxylgruppen und der Hydroxylgruppen 20:1 bis 1:1, bevorzugt 8:1 bis 5:1 und besonders bevorzugt 5:1 bis 1,7:1 beträgt (Anhydridgruppen werden hierbei als 2 Carboxylgruppen berechnet).

Die Zugabe des Säurepolymeren und des Polyols zur wäßrigen Dispersion kann zu einem beliebigen Zeitpunkt erfolgen.

Die wäßrige Polymerdisperion kann Phosphor enthaltende Reaktionsbeschleuniger enthalten; bevorzugt enthält sie jedoch keine derartigen Verbindungen.

In einer besonderen Ausführungsform erfolgt die Herstellung des Emulsionspolymerisats in Gegenwart zumindest einer Teilmenge des Säurepolymeren SP. In diesem Fall ist SP vorzugsweise

- 50 bis 99,5 Gew.-% mindestens einer ethylenisch ungesättigten Mono-, Dicarbonsäure oder eines Dicarbonsäureanhydrids,
- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
- bis zu 20 Gew.-% mindestens eines weiteren Monomers.

Besonders bevorzugt erfolgt die Emulsionspolymerisation in Gegenwart von mindestens 30 Gew.-%, insbesondere mindestens 50 Gew.-%, ganz besonders bevorzugt mindestens 100 Gew.-% der Gesamtmenge SP.

Das Polymerisat SP enthält 50 bis 99,5 Gew.-%, bevorzugt 70 bis 99 Gew.-%, solcher Strukturelemente eingebaut, die sich von mindestens einer ethylenisch ungesättigten Mono- oder Dicarbonsäure ableiten. Diese Säuren können in dem Polymerisat gewünschtenfalls auch teilweise oder vollständig in Form eines Salzes vorliegen. Bevorzugt ist die saure Form.

Vorzugsweise ist SP zu mehr als 10 g/l (bei 25 °C) in Wasser löslich.

Bevorzugte Carbonsäuren sind $C_3$- bis $C_{10}$-Monocarbonsäuren und $C_4$bis $C_8$-Dicarbonsäuren, insbesondere Acrylsäure, Methacrylsäure, Crotonsäure, Fumarsäure, Maleinsäure, 2-Methylmaleinsäure und/oder Itaconsäure. Besonders bevorzugt sind Acrylsäure, Methacrylsäure, Maleinsäure und Mischungen davon. Bei der Herstellung des Polymerisats SP können selbstverständlich auch anstelle der Säuren oder zusammen mit den Säuren deren Anhydride, wie Maleinsäureanhydrid, Acrylsäure- oder Methacrylsäureanhydrid eingesetzt werden.

Das Polymerisat SP enthält ferner 0,5 bis 50 Gew.-%, bevorzugt 1 bis 30 Gew.-%, wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit mindestens einem hydroxylgruppenhaltigen Amin, in einpolymerisierter Form.

Das Polymer SP liegt vorzugsweise als Kammpolymer mit kovalent gebundenen Aminseitenketten vor.

Für die Ester geeignete Monocarbonsäuren sind die zuvor genannten $C_3$- bis $C_{10}$-Monocarbonsäuren, insbesondere Acrylsäure, Methacrylsäure, Crotonsäure, und Mischungen davon.

Für die Halbester und Diester geeignete Dicarbonsäuren sind die zuvor genannten $C_4$- bis $C_8$-Dicarbonsäuren, insbesondere Fumarsäure, Maleinsäure, 2-Methylmaleinsäure, Itaconsäure, und Mischungen davon.

Vorzugsweise ist das Amin mit mindestens einer Hydroxylgruppe ausgewählt aus sekundären und tertiären Aminen, die wenigstens einen $C_6$- bis $C_{22}$-Alkyl-, $C_6$- bis $C_{22}$-Alkenyl-, Aryl-$C_6$- bis $C_{22}$-alkyl- oder Aryl-$C_6$- bis $C_{22}$-alkenylrest aufweisen, wobei die Alkenylgruppe 1, 2 oder 3 nicht benachbarte Doppelbindungen aufweisen kann.

Vorzugsweise ist das Amin hydroxyalkyliert und/oder alkoxyliert. Alkoxylierte Amine weisen vorzugsweise einen oder zwei Alkylenoxidreste mit terminalen Hydroxylgruppen auf. Vorzugsweise weisen die Alkylenoxidreste je 1 bis 100, bevorzugt je 1 bis 50, gleiche oder verschiedene Alkylenoxideinheiten, statistisch verteilt oder in Form von Blöcken auf. Bevorzugte Alkylenoxide sind Ethylenoxid, Propylenoxid und/oder Butylenoxid. Besonders bevorzugt ist Ethylenoxid.

Bevorzugt enthält das Polymerisat SP eine ungesättigte Verbindung auf Basis einer Aminkomponente eingebaut, die wenigstens ein Amin der allgemeinen Formel

$$R^cNR^aR^b$$

enthält, wobei

$R^c$ für C6- bis $C_{22}$-Alkyl, $C_6$- bis $C_{22}$-Alkenyl, Aryl-$C_6$-$C_{22}$-alkyl oder Aryl-$C_6$-$C_{22}$-alkenyl steht, wobei der Alkenylrest 1,2 oder 3 nicht benachbarte Doppelbindungen aufweisen kann,

$R^a$ für Hydroxy-$C_1$-$C_6$-alkyl oder einen Rest der Formel II

$$-(CH_2CH_2O)_x(CH_2CH(CH_3)O)_y\text{-}H \quad \text{(II)}$$

steht, wobei
in der Formel II die Reihenfolge der Alkylenoxideinheiten beliebig ist und x und y unabhängig voneinander für eine ganze
Zahl von 0 bis 100, bevorzugt 0 bis 50, stehen, wobei die
Summe aus x und y > 1 ist,

$R^b$ für Wasserstoff, $C_1$- bis $C_{22}$-Alkyl, Hydroxy-$C_1$-$C_6$-alkyl, $C_6$- bis $C_{22}$-Alkenyl, Aryl-$C_6$-$C_{22}$-alkyl, Aryl-$C_6$-$C_{22}$-alkenyl oder $C_5$- bis $C_8$-Cycloalkyl steht, wobei der Alkenylrest 1,2 oder 3 nicht benachbarte Doppelbindungen aufweisen kann, oder $R^b$ für einen Rest der Formel III

$$-(CH_2CH_2O)_v(CH_2CH(CH_3)O)_w\text{-}H \quad \text{(III)}$$

steht, wobei
in der Formel III die Reihenfolge der Alkylenoxideinheiten beliebig ist und v und w unabhängig voneinander für eine ganze Zahl von 0 bis 100, vorzugsweise 0 bis 50, stehen.

Bevorzugt steht $R^c$ für $C_8$- bis $C_{20}$-Alkyl oder $C_8$- bis $C_{20}$-Alkenyl, wobei der Alkenylrest 1,2 oder 3 nicht benachbarte Doppelbindungen aufweisen kann. Vorzugsweise steht $R^c$ für den Kohlenwasserstoffrest einer gesättigten oder ein- oder mehrfach ungesättigten Fettsäure. Bevorzugte Reste $R^c$ sind z. B. n-Octyl, Ethylhexyl, Undecyl, Lauryl, Tridecyl, Myristyl, Pentadecyl, Palmityl, Margarinyl, Stearyl, Palmitoleinyl, Oleyl und Linolyl.

Besonders bevorzugt handelt es sich bei der Aminkomponente um ein alkoxyliertes Fettamin oder ein alkoxyliertes Fettamingemisch. Besonders bevorzugt sind die Ethoxylate. Insbesondere werden Alkoxylate von Aminen auf Basis natürlich vorkommender Fettsäuren eingesetzt, wie z. B. Talgfettamine, die überwiegend gesättigte und ungesättigte $C_{14}$-, $C_{16}$- und $C_{18}$-Alkylamine enthalten oder Kokosamine, die gesättigte, einfach und zweifach ungesättigte $C_6$-$C_{22}$-, vorzugsweise $C_{12}$-$C_{14}$-Alkylamine enthalten. Zur Alkoxylierung geeignete Amingemische sind z. B. verschiedene Armeen®-Marken der Fa. Akzo oder Noram®-Marken der Fa. Ceca.

Geeignete, kommerziell erhältliche alkoxylierte Amine sind z. B. die Noramox®-Marken der Fa. Ceca, bevorzugt ethoxylierte Oleylamine, wie Noramox® 05 (5 EO-Einheiten), sowie die unter der Marke Lutensol®FA vertriebenen Produkte der Fa. BASF AG.

Die Einpolymerisierung der vorgenannten Ester, Halbester und Diester bewirkt im Allgemeinen eine ausgeprägte Stabilisierung einer Polymerdispersion, welche in Gegenwart von SP hergestellt wird. Die erfindungsgemäßen Polymerdispersionen behalten ihre kolloidale Stabilität der Latexpartikel bei Verdünnung mit Wasser oder verdünnten Elektrolyten oder Tensidlösungen zuverlässig bei.

Die Veresterung zur Herstellung der zuvor beschriebenen Ester, Halbester und Diester erfolgt nach üblichen, dem Fachmann bekannten Verfahren. Zur Herstellung von Estern ungesättigter Monocarbonsäuren können die freien Säuren oder geeignete Derivate, wie Anhydride, Halogenide, z. B. Chloride, und ($C_1$- bis $C_4$)-Alkylester eingesetzt werden. Die Herstellung von Halbestern ungesättigter Dicarbonsäuren erfolgt bevorzugt ausgehend von den entsprechenden Dicarbonsäureanhydriden. Vorzugsweise erfolgt die Umsetzung in Gegenwart eines Katalysators, wie z. B. eines Dialkyltitanats oder einer Säure, wie Schwefelsäure, Toluolsulfonsäure oder Methansulfonsäure. Die Umsetzung erfolgt im Allgemeinen bei Reaktionstemperaturen von 60 bis 200 °C. Nach einer geeigneten Ausführungsform erfolgt die Umsetzung in Gegenwart eines Inertgases, wie Stickstoff. Bei der Reaktion gebildetes Wasser kann durch geeignete Maßnahmen, wie Abdestillieren, aus dem Reaktionsgemisch entfernt werden. Die Umsetzung kann gewünschtenfalls in Gegenwart üblicher Polymerisationsinhibitoren erfolgen. Die Veresterungsreaktion kann im Wesentlichen vollständig oder nur bis zu einem Teilumsatz durchgeführt werden. Gewünschtenfalls kann eine der Esterkomponenten, vorzugsweise das hydroxylgruppenhaltige Amin, im Überschuss eingesetzt werden. Der Anteil der Esterbildung kann mittels Infrarotspektroskopie ermittelt werden.

Nach einer bevorzugten Ausführungsform erfolgt die Herstellung der ungesättigten Ester, Halbester oder Diester und deren weitere Umsetzung zu den Polymerisaten SP ohne Zwischenisolierung der Ester und vorzugsweise nacheinander im selben Reaktionsgefäß.

Bevorzugt wird zur Herstellung der Polymerisate SP ein Umsetzungsprodukt aus einem Dicarbonsäureanhydrid, vorzugsweise Maleinsäureanhydrid, und einem der zuvor beschriebenen hydroxylgruppenhaltigen Amine eingesetzt.

Neben den Bestandteilen Carbonsäure sowie Ester, Halbester und/oder Diester kann das Polymerisat SP noch 0 bis 20 Gew.-%, bevorzugt 0,1 bis 10 Gew.-%, andere Monomere einpolymerisiert enthalten. Brauchbare Monomere sind die im Zusammenhang mit dem Polymerisat A1 genannten Monomere, wobei Vinylaromaten, wie Styrol, Olefine, beispielsweise Ethylen, oder (Meth)acrylsäureester wie Methyl(meth)acrylat, Ethyl(meth)acrylat, n-Butyl(meth)acrylat, 2-Ethylhexyl(meth)acrylat und Mischungen davon besonders bevorzugt sind.

Die Herstellung der Polymerisate SP erfolgt vorzugsweise durch radikalische Polymerisation in Substanz oder in Lösung. Geeignete Lösungsmittel für die Lösungsmittelpolymerisation sind z. B. Wasser, mit Wasser mischbare organische Lösungsmittel, wie Alkohole und Ketone, beispielsweise Methanol, Ethanol, n-Propanol, Isopropanol, n-Butanol, Aceton, Methylethylketon etc., und Mischungen davon. Geeignete Polymerisationsinitiatoren sind beispielsweise Peroxide, Hydroperoxide, Peroxodisulfate, Percarbonate, Peroxoester, Wasserstoffperoxid und Azoverbindungen, wie sie im Folgenden für die Herstellung der erfindungsgemäßen Polymerdispersionen näher beschrieben werden. Die Polymerisate SP können gewünschtenfalls separat hergestellt und nach üblichem Verfahren isoliert und/oder gereinigt werden. Bevorzugt werden die Polymerisate SP unmittelbar vor der Herstellung der erfindungsgemäßen Polymerdispersionen hergestellt und ohne Zwischenisolierung für die Dispersionspolymerisation eingesetzt.

Die Herstellung der Polymerisate SP kann vorteilhaft auch durch polymeranaloge Umsetzung erfolgen. Dazu kann ein Polymerisat, das 80 bis 100 Gew.-% mindestens einer ethylenisch ungesättigten Mono- und/oder Dicarbonsäure sowie 0 bis 20 Gew.-% der zuvor genannten anderen Polymere eingebaut enthält, mit mindestens einem hydroxylgruppenhaltigen Amin umgesetzt werden.

Das Gewichtsverhältnis von Polymerisat EP zu Polymerisat SP, auf Feststoffbasis, liegt vorzugsweise im Bereich von 7:1 bis 1:7, insbesondere 3:1 bis 1:3.

Neben den Polymerisaten EP und SP kann die Polymerdispersion noch 0 bis 50 Gew.-%, bevorzugt 0,1 bis 40 Gew.-%, bezogen auf das Polymerisat SP, mindestens eines oberflächenaktiven, alkoxylierten, bevorzugt ethoxylierten oder propoxylierten, Alkylamins enthalten. Bevorzugte Alkylamine sind die Alkylamine der Formel $R^cNR^aR^b$, wie zuvor definiert, die auch in dem Polymerisat SP enthalten sind, wobei Alkylamine der Formel

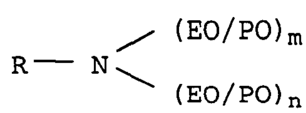

in der R ein Alkyl-, Alkenyl- oder Alkylvinylrest mit mindestens 6 Kohlenstoffatomen darstellt und m und n unabhängig voneinander ≥ 1 sind, besonders bevorzugt sind. Bevorzugte Reste R weisen 8 bis 22 Kohlenstoffatome auf.

Die in dem Polymerisat SP enthaltenen alkoxylierten Alkylamine und die zusätzlichen Alkylamin-Vernetzer können gleiche oder verschiedene Verbindungen sein.

Besonders bevorzugte Zusammensetzungen der Polymerdispersionen enthalten

a) 70 bis 30 Gew.-% Polymerisat EP,
b) 30 bis 70 Gew.-% Polymerisat SP und gegebenenfalls
c) 0 bis 10 Gew.-% oberflächenaktives alkoxyliertes Alkylamin,
d) 0 bis 20 Gew.-% Polyol-Vernetzer,
e) 0 bis 5 Gew.-% Reaktionsbeschleuniger (insbesondere kein Reaktionsbeschleuniger),

bezogen auf die Gewichtssumme von a) bis e) und zusätzlich die oben angegebene Menge Alkoxysilan.

Zusätzlich zu den genannten Bestandteilen können übliche Zusätze je nach Anwendungszweck zugesetzt werden. Die Polymerdispersion und die weitere Zusätze enthaltende Polymerdisperison wird im folgenden zusammenfassend auch "Zusammensetzung" genannt.

Die in der Zusammensetzung gegebenenfalls zusätzlich enthaltenen Komponenten werden im allgemeinen nach dem Ende der Emulsionspolymerisation zugegeben.

Weiter können die Zusammensetzungen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Plastifizierungsmittel, Retentionsmittel, Pigmente und Füllstoffe enthalten.

Schließlich können die Zusammensetzungen übliche Brandschutzmittel, wie z. B. Aluminiumsilikate, Aluminiumhydroxide, Borate und/oder Phosphate enthalten.

Die Zusammensetzungen können auch in Abmischung mit anderen Bindemitteln, wie beispielsweise Harnstoff-Formaldehyd-Harzen, Melamin-Formaldehyd-Harzen oder Phenol-Formaldehyd-Harzen, sowie mit Epoxidharzen eingesetzt werden.

Die Zusammensetzungen sind vorzugsweise formaldehydfrei. Formaldehydfrei bedeutet, dass die Zusammensetzungen keine wesentlichen Mengen an Formaldehyd enthalten und auch bei Trocknung und/oder Härtung keine wesentlichen Mengen an Formaldehyd freigesetzt werden. Im Allgemeinen enthalten die Zusammensetzungen < 100 ppm Formaldehyd. Sie ermöglichen die Herstellung von Formkörpern mit kurzer Härtungszeit und verleihen den Formkörpern ausgezeichnete mechanische Eigenschaften.

Die Zusammensetzungen sind vor der Anwendung im Wesentlichen unvernetzt und daher thermoplastisch. Wenn erforderlich, kann jedoch ein geringer Grad an Vorvernetzung des Polymerisats EP eingestellt werden, z. B. durch Verwendung von Monomeren mit zwei oder mehr polymerisierbaren Gruppen.

Die Polymerdispersion bzw. Zusammensetzung kann z.B. als Bindemittel für faserige und körnige Substrate, wie z. B. Holzschnitzel, Holzfasern, Textilfasern, Glasfasern, Mineralfasern oder Naturfasern wie Jute, Flachs, Hanf oder Sisal, aber auch Korkschnitzel oder Sand verwendet werden. Nach Härtung werden Formteile mit einer hohen mechanischen Festigkeit erhalten, die auch im Feuchtklima ihre Dimensionsstabilität behalten. Bevorzugt ist die thermische Härtung. Die Härtungstemperaturen betragen im Allgemeinen 80 bis 250 °C, vorzugsweise 100 bis 200 °C.

Beim Erhitzen verdampft das in der Zusammensetzung enthaltene Wasser und es kommt zur Härtung der Zusammensetzung. Diese Prozesse können nacheinander oder gleichzeitig ablaufen. Unter Härtung wird in diesem Zusammenhang die chemische Veränderung der Zusammensetzung verstanden, z. B. die Vernetzung durch Knüpfung von kovalenten Bindungen zwischen den verschiedenen Bestandteilen der Zusammensetzungen, Bildungen von ionischen Wechselwirkungen und Clustern, Bildung von Wasserstoffbrücken. Weiterhin können bei der Härtung auch physikalische Veränderungen im Bindemittel ablaufen, wie z. B. Phasenumwandlungen oder Phaseninversionen. Ein Vorteil der erfindungsgemäßen Zusammensetzungen ist, dass ihre Härtung bei vergleichsweise niedrigen Temperaturen erfolgen kann. Die Dauer und die Temperatur der Erwärmung beeinflussen den Aushärtungsgrad.

Die Aushärtung kann auch in zwei oder mehr Stufen erfolgen. So kann z. B. in einem ersten Schritt die Härtungstemperatur und -zeit so gewählt werden, dass nur ein geringer Härtungsgrad erreicht wird und weitgehend vollständige Aushärtung in einem zweiten Schritt erfolgt. Dieser zweite Schritt kann räumlich und zeitlich getrennt vom ersten Schritt erfolgen. Dadurch wird beispielsweise die Verwendung der erfindungsgemäßen Zusammensetzungen zur Herstellung von mit Bindemittel imprägnierten Halbzeugen möglich, die an anderer Stelle verformt und ausgehärtet werden können.

Ein weiterer Gegenstand der Erfindung ist ein gebundenes Substrat, erhältlich durch Behandeln eines Substrats mit einer wässrigen Polymerdispersion wie zuvor beschrieben und anschließende Härtung. Bevorzugt liegt das Substrat in Form eines Formkörpers vor oder als Vlies (Faservlies).

Die Formkörper haben bevorzugt eine Dichte von 0,2 bis 1,4 g/$cm^3$ bei 23 °C.

Als Formkörper kommen insbesondere Platten und konturierte Formteile in Betracht. Ihre Dicke beträgt im Allgemeinen mindestens 1 mm, vorzugsweise mindestens 2 mm, ihre Oberfläche beträgt typischerweise 200 bis 200 000 $cm^2$. In Betracht kommen insbesondere Holzfaser- und Spanplatten, Korkplatten, -blöcke und -formen, Dämmstoffplatten und -rollen, z. B. aus Mineral- und Glasfasern,

Automobilinnenteile, z. B. Türinnenverkleidungen, Armaturenträger, Hutablagen, etc.

Die Gewichtsmenge des verwendeten Bindemittels beträgt im Allgemeinen 0,5 bis 40 Gew.-%, vorzugsweise 1 bis 30 Gew.-% (Bindemittel fest), bezogen auf das Substrat (Fasern, Schnitzel oder Späne).

Die Fasern, Schnitzel oder Späne können direkt mit dem Bindemittel beschichtet werden oder mit dem wässrigen Bindemittel vermischt werden. Die Viskosität des wässrigen Bindemittels wird vorzugsweise auf 10 bis 4 000 mPas, bevorzugt auf 30 bis 2 000 mPas (DIN 53019, Rotationsviskosimeter bei 250 $sec^{-1}$) eingestellt.

Die Mischung aus Fasern, Schnitzeln und Spänen und dem Bindemittel kann z. B. bei Temperaturen von 10 bis 150 °C vorgetrocknet werden und anschließend zu den Formkörpern, z. B. bei Temperaturen von 80 bis 250 °C, vorzugsweise 100 bis 200 °C, und Drücken von im Allgemeinen 2 bis 1 000 bar, vorzugsweise 10 bis 750 bar, besonders bevorzugt 200 bis 500 bar zu den Formkörpern verpresst werden.

Die Bindemittel eignen sich insbesondere zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz, wie z. B. Holzspänen und Holzfasern, hergestellt werden können. Die Wasserfestigkeit von Holzwerkstoffen kann erhöht werden, indem man dem Bindemittel eine handelsübliche wässrige Paraffindispersion oder andere Hydrophobierungsmittel zusetzt, bzw. diese Hydrophobierungsmittel vorab oder nachträglich den Fasern, Schnitzeln oder Spänen zusetzt.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Es werden bevorzugt Späne eingesetzt, deren mittlere Spangröße zwischen 0,1 und 4 mm, insbesondere

0,2 und 2 mm liegt, und die weniger als 6 Gew.-% Wasser enthalten. Es können jedoch auch deutlich grobteiligere Späne und solche mit höherem Feuchtigkeitsgehalt eingesetzt werden. Das Bindemittel wird möglichst gleichmäßig auf die Holzspäne aufgetragen, wobei das Gewichtsverhältnis Bindemittel fest:Holzspäne vorzugsweise 0,02:1 bis 0,3: 1 beträgt. Eine gleichmäßige Verteilung lässt sich beispielsweise erreichen, indem man das Bindemittel in feinverteilter Form auf die Späne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100 bis 250 °C, bevorzugt von 120 bis 225 °C durch Anwendung von Drücken von üblicherweise 10 bis 750 bar zu einer Platte verpresst. Die benötigten Presszeiten können in einem weiten Bereich variieren und liegen im Allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180 °C hergestellt werden.

Zur Beleimung werden die Holzfasern im Allgemeinen mit einem Luftstrom aufgewirbelt und das Bindemittel in den so erzeugten Fasernstrom eingedüst ("Blow-Line" Verfahren). Das Verhältnis Holzfasern zu Bindemittel, bezogen auf den Trockengehalt bzw. Feststoffgehalt beträgt üblicherweise 40:1 bis 2:1, bevorzugt 20:1 bis 4:1. Die beleimten Fasern werden in dem Fasernstrom bei Temperaturen von z. B. 130 bis 180 °C getrocknet, zu einem Faservlies ausgestreut und bei Drücken von 10 bis 50 bar zu Platten oder Formkörpern verpresst.

Die beleimten Holzfasern können auch, wie z. B. in der DE-OS 2 417 243 beschrieben, zu einer transportablen Fasermatte verarbeitet werden. Dieses Halbzeug kann dann in einem zweiten, zeitlich und räumlich getrennten Schritt zu Platten oder Formteilen, wie z. B. Türinnenverkleidungen von Kraftfahrzeugen weiterverarbeitet werden.

Auch andere Naturfaserstoffe, wie Sisal, Jute, Hanf, Flachs, Kokosfasern, Bananenfasern und andere Naturfasern können mit den Bindemitteln zu Platten und Formteile verarbeitet werden. Die Naturfaserstoffe können auch in Mischungen mit Kunststofffasern, z. B. Polypropylen, Polyethylen, Polyester, Polyamide oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den Bindemitteln imprägniert werden, gegebenenfalls unter Zusatz eines Benetzungshilfsmittels. Die imprägnierten Matten werden dann im bindemittelfeuchten oder vorgetrockneten Zustand z. B. bei Temperaturen zwischen 100 und 250 °C und Drücken zwischen 10 und 100 bar zu Platten oder Formteilen verpreßt.

Bevorzugt haben die mit den Bindemitteln imprägnierten Substrate beim Verpressen einen Restfeuchtegehalt von 3 bis 20 Gew.-%, bezogen auf das zu bindende Substrat.

Die erhaltenen Formkörper haben eine geringe Wasseraufnahme, eine niedrige Dickenquellung nach Wasserlagerung, eine gute Festigkeit und sind formaldehydfrei.

Außerdem kann man die Zusammensetzungen als Bindemittel für Beschichtungs- und Imprägniermassen für Platten aus organischen und/oder anorganischen Fasern, nicht fasrigen mineralischen Füllstoffen sowie Stärke und/oder wässrigen Polymerisatdispersionen verwenden. Die Beschichtungs- und Imprägniermassen verleihen den Platten einen hohen Biegemodul. Die Herstellung derartiger Platten ist bekannt.

Derartige Platten werden üblicherweise als Schalldämmplatten eingesetzt. Die Dicke der Platten liegt üblicherweise im Bereich von etwa 5 bis 30 mm, bevorzugt im Bereich von 10 bis 25 mm. Die Kantenlänge der quadratischen oder rechteckigen Platten liegt üblicherweise im Bereich von 200 bis 2.000 mm.

Ferner können die Zusammensetzungen in der Beschichtungs- und Imprägnierungstechnologie übliche Hilfsstoffe enthalten. Beispiele hierfür sind feinteilige inerte Füllstoffe, wie Aluminiumsilikate, Quarz, gefällte oder pyrogene Kieselsäure, Leicht- und Schwerspat, Talkum, Dolomit oder Calciumcarbonat; farbgebende Pigmente, wie Titanweiß, Zinkweiß, Eisenoxidschwarz etc., Schauminhibitoren, wie modifizierte Dimethylpolysiloxane, und Haftvermittler sowie Konservierungsmittel.

Die Komponenten der Zusammensetzung sind in der Beschichtungsmasse im Allgemeinen in einer Menge von 1 bis 65 Gew.-% enthalten. Der Anteil der inerten Füllstoffe liegt im Allgemeinen bei 0 bis 85 Gew.-%, der Wasseranteil beträgt mindestens 10 Gew.-%.

Die Anwendung der Zusammensetzungen erfolgt in üblicher Weise durch Auftragen auf ein Substrat, beispielsweise durch Sprühen, Rollen, Gießen oder Imprägnieren. Die aufgetragenen Mengen, bezogen auf den Trokkengehalt der Zusammensetzung, betragen im Allgemeinen 2 bis 100 $g/m^2$.

Die einzusetzenden Mengen an Zusatzstoffen sind dem Fachmann bekannt und richten sich im Einzelfall nach den gewünschten Eigenschaften und dem Anwendungszweck.

Die Zusammensetzungen sind auch als Bindemittel für Dämmstoffe aus anorganischen Fasern, wie Mineralfasern und Glasfasern brauchbar. Solche Dämmstoffe werden technisch durch Verspinnen von Schmelzen der entsprechenden mineralischen Rohstoffe hergestellt, siehe US-A-2,550,465, US-A-2,604,427, US-A-2,830,648, EP-A-354 913 und EP-A-567 480. Die Zusammensetzung wird dann auf die frisch hergestellten, noch heißen anorganischen Fasern aufgesprüht. Das Wasser verdampft dann weitgehend und die Zusammensetzung bleibt im Wesentlichen unausgehärtet als Viskosemasse auf den Fasern haften. Eine auf diese Weise hergestellte endlose, bindemittelhaltige Fasermatte wird von geeigneten Förderbändern durch einen Härtungsofen weitertransportiert. Dort härtet die Matte bei Temperaturen im Bereich von ca. 100 bis 200 °C zu einer steifen Matrix aus. Nach dem Härten werden die Dämmstoffmatten in geeigneter Weise konfektioniert.

Der überwiegende Anteil der in den Dämmstoffen verwendeten Mineral- oder Glasfasern hat einen Durchmesser im Bereich von 0,5 bis 20 µm und eine Länge im Bereich von 0,5 bis 10 cm.

Die Zusammensetzungen eignen sich außerdem als Bindemittel für Faservliese.

Als Faservliese seien z. B. Vliese aus Cellulose, Celluloseacetat, Ester und Ether der Cellulose, Baumwolle, Hanf, tierische Fasern, wie Wolle oder Haare und insbesondere Vliese von synthetischen oder anorganischen Fasern, z. B. Aramid-, Kohlenstoff-, Polyacrylnitril-, Polyester-, Mineral-, PVC- oder Glasfasern genannt.

Im Falle der Verwendung als Bindemittel für Faservliese können die Zusammensetzungen z. B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d. h. verfestigt.

Dazu wird das Bindemittel vorzugsweise im Gewichtsverhältnis Faser/Bindemittel (fest) von 10:1 bis 1:1, besonders bevorzugt von 6:1 bis 3:1 auf das Rohfaservlies z. B. durch Beschichten, Imprägnieren, Tränken aufgebracht.

Das Bindemittel wird dabei vorzugsweise in Form einer verdünnten wässrigen Zubereitung mit 95 bis 40 Gew.-% Wasser verwendet.

Nach dem Aufbringen des Bindemittels auf das Rohfaservlies erfolgt im allgemeinen eine Trocknung vorzugsweise bei 100 bis 400, insbesondere 130 bis 280 °C, ganz besonders bevorzugt 130 bis 230 °C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Die erfindungsgemäßen Bindemittel erlauben insbesondere kurze Trocknungszeiten und auch niedrige Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z. B. aus PVC.

Bei der Verwendung als Dachbahnen werden die gebundenen Faservliese im Allgemeinen mit Bitumen beschichtet.

Aus den wässrigen Zusammensetzungen lassen sich weiterhin geschäumte Platten oder Formkörper herstellen. Dazu wird zunächst das in der Zusammensetzung enthaltene Wasser bei Temperaturen von < 100 °C bis zu einem Gehalt von < 20 Gew.-% entfernt. Die so erhaltene viskose Zusammensetzung wird dann bei Temperaturen > 100 °C, vorzugsweise bei 120 bis 300 °C, verschäumt. Als Treibmittel kann z. B. das in der Mischung noch enthaltene Restwasser und/oder die bei der Härtungsreaktion entstehenden gasförmigen Reaktionsprodukte dienen. Es können jedoch auch handelsübliche Treibmittel zugesetzt werden. Die entstehenden vernetzten Polymerschäume können beispielsweise zur Wärmedämmung und zur Schallisolierung eingesetzt werden.

Mit den Zusammensetzungen lassen sich durch Imprägnierung von Papier und anschließende schonende Trocknung nach den bekannten Verfahren sogenannte Laminate, z. B. für dekorative Anwendungen, herstellen. Diese werden in einem zweiten Schritt auf das zu beschichtende Substrat unter Einwirkung von Hitze und Druck auflaminiert, wobei die Bedingungen so gewählt werden, dass es zur Aushärtung des Bindemittels kommt.

Die Zusammensetzungen können weiterhin zur Herstellung von Schleifpapier und Schleifkörpern nach den üblicherweise mit Phenolharz als Bindemittel durchgeführten Herstellverfahren verwendet werden. Bei der Herstellung von Schleifpapieren wird auf ein geeignetes Trägerpapier zunächst eine Schicht der erfindungsgemäßen Bindemittel als Grundbinder aufgetragen (zweckmäßigerweise 10 g/$m^2$). In den feuchten Grundbinder wird die gewünschte Menge an Schleifkorn, z. B. Siliciumcarbid, Korund, etc., eingestreut. Nach einer Zwischentrocknung wird eine Deckbinderschicht aufgetragen (z. B. 5 g/$m^2$). Das auf diese Weise beschichtete Papier wird anschließend zur Aushärtung noch 5 Min. lang bei 170 °C getempert.

Über die Zusammensetzung des Polymerisates SP kann die Härte und Flexibilität der Zusammensetzung auf das gewünschte Niveau eingestellt werden.

Die Zusammensetzungen sind weiterhin geeignet als formaldehydfreie Sandbindemittel zur Herstellung von Gussformen und Gusskernen für den Metallguss nach den üblichen thermischen Härtungsverfahren (E. Flemming, W. Tilch, Formstoffe und Formverfahren, Dt. Verlag für Grundstoffindustrie, Stuttgart, 1993).

Weiterhin eignen sie sich als Bindemittel für Kokillendämmplatten.

Die nachfolgenden, nicht einschränkenden Beispiele erläutern die Erfindung.

Beispiele:

A) : Herstellung des Säurepolymeren SP

In einem Druckreaktor mit Ankerrührer werden 0,55 kg vollentsalztes Wasser, 0,36 kg Maleinsäureanhydrid sowie 0,91 kg einer 40 gew.-%igen wässrigen Lösung eines ethoxylierten Oleylamins (mittlerer Ethoxylierungsgrad = 12, Fa. BASF AG) vorgelegt. Unter Stickstoffatmosphäre wird auf 125 °C erwärmt. Nach Erreichen dieser Temperatur wird innerhalb von 4 h Zulauf 1, bestehend aus 0,75 kg vollentsalztem Wasser und 1,00 kg Acrylsäure sowie innerhalb von 5 h Zulauf 2, bestehend aus 0,22 kg vollentsalztem Wasser und 0,12 kg $H_2O_2$ (30 gew.-%ig) gleichmäßig zudosiert. Nach Ende von Zulauf 1 werden weitere 0,11 kg vollentsalztes Wasser zugegeben. Nach Ende der Reaktion wird auf Raumtemperatur abgekühlt. Die so erhaltene wässrige Polymerisat-Lösung hat einen Feststoffgehalt von 43,2 %, einen pH-Wert von 1,7 und eine Viskosität von 450 mPas. Der K-Wert beträgt 13,3.

B) Polymerdispersionen (Emulsionspolymerisation in Gegenwart des Säurepolymeren und Alkoxysilans)

Polymerdispersion mit EP1:

In einem 4 1-Glasgefäß mit Ankerrührer (120 UpM) werden 640 g Wasser, 133,1 g einer wässrigen Lösung des Säurepolymerisats SP (43,2 gew.-%ig) aus Beispiel A, 5,35 g (10 %) des Zulaufs 2 und 5,75 g Silan (Witco A-1100 Silan) vorgelegt und auf 90 °C erhitzt. Nach 10 min werden bei dieser Temperatur der Rest von Zulauf 1 innerhalb von 3 h und die Restmenge von Zulauf 2 innerhalb von 3,5 h räumlich getrennt zudosiert. Anschließend wird noch 30 min bei dieser Temperatur nachpolymerisiert und das Reaktionsgemisch abgekühlt und mit Zulauf 3 abgemischt. Die so hergestellte Polymerdispersion enthält 47,3 Gew.-% nichtflüchtige Anteile und hat einen pH-Wert von 2,7. Die Viskosität der erhaltenen Polymerdispersion beträgt 630 mPas (bei 250 $s^{-1}$). Abschließend versetzt man die Dispersion mit 9 % Triethanolamin (bezogen auf den Feststoffgehalt).

| Zulauf 1 | |
|---|---|
| 185,32 g | Wasser |
| 665,51 g | SP (43,2%ig) |
| 28,75 g | gamma Aminopropyltrimethoxysilan (A-1100, Witco) (100%) |
| 805,00 g | Styrol (100%) |
| 287,50 g | MMA (100 %) |
| 57,50 | HEA (100 %) |

| Zulauf 2: | |
|---|---|
| 50 g | vollentsalztes Wasser |
| 3,45 g | Natriumperoxodisulfat |

| Zulauf 3 | |
|---|---|
| 1863,43 g | SP (43,2 %) |
| 80,50 g | A1100 Silan |

Polymerdisperion mit EP2:

Fahrweise wie EP 1, nur andere Zulaufzusammensetzungen

| Zulauf 1: | | |
|---|---|---|
| 185,32 g | Wasser | |
| 2528,94 g | SP | (43,2%) |
| 109,25 g | Silan | (100%) |

(fortgesetzt)

| Zulauf 1: | | |
|---|---|---|
| 805,00 g | Styrol | (100%) |

| | | |
|---|---|---|
| 287,50 g | MMA | (100 %) |
| 57,5 g | HEA | (100 %) |

kein Zulauf 3 (alles SP und Silan in Zulauf 1)

| Zulauf 2: | |
|---|---|
| 50 g | vollentsalztes Wasser |
| 3,45 g | Natriumperoxodisulfat |

pH = 2,7
Visko (mPas bei 250 $s^{-1}$) = 510 mPas
FG = 47,5

Polymerdispersion mit EP3:

Wie EP 1, geändert wurde nur Zulauf 2

| Zulauf 2 | | |
|---|---|---|
| 185,32 g | Wasser | |
| 665,51 g | SP | 43,2 %) |
| 28,75 g | A-1100 Silan | (100 %) |
| 845,25 g | EHA | (100 %) |
| 241,50 g | Styrol | (100 %) |
| 63,25 g | HEA | (100 %) |

Vergleichsbeispiele

In den Vergleichsbeispielen wurde Alkoxysilan entweder nach Beendigung der Emulsionspolymerisation zugegeben (Versuche 3a, b und c) oder gar nicht (Versuch 1).

Tabelle

| Zusammensetzungen: | |
|---|---|
| Säurepolymer SP: | 56 Gew.-% Acrylsäure<br>24 Gew.-% Maleinsäure<br>20 Gew.-% ethoxyliertes<br>Oleylamin |

Tabelle (fortgesetzt)

| Zusammensetzungen: | |
|---|---|
| Emulsionspolymerisat EP 1 und EP 2 | 70 Gew.-% Styrol<br>25 Gew.% Methylmethacrylat (MMA)<br>5 Gew.-% Hydroxyethylacrylat (HEA) |
| EP 3: | 73,5 Gew.-% Ethylhexylacrylat<br>21 Gew.-% Styrol<br>5,5 Gew.-% Hydroxyethyl-acrylat |

Das Verhältnis SP:EP betrug immer 1:1 (fest)

C) Anwendungstechnische Prüfungen

300 g Quarzsand H34 wurden mit den Bindemittel-Zusammensetzungen bei Raumtemperatur vermischt (5 Gew.-% oder 3 Gew.-% trockenes Bindemittel gemäß Tabelle, bezogen auf Sand). Aus den feuchten Mischungen werden in einer entsprechenden Metallform Prüfkörper (Fischer-Riegel) mit den Abmessungen 17 x 2,3 x 2,3 cm geformt, verdichtet und nach dem Entformen 2 h im Umluftofen bei Temperaturen gemäß der Tabelle ausgehärtet. Zum Verdichten wird eine Ramme von Typ PRA der Georg Fischer AG eingesetzt. Die Riegel wurden vor der Prüfung für 3 Stunden in 80°C warmen Wasser gelagert. Dann wurde die Wasseraufnahme der noch nassen Riegel bestimmt (in Tabelle WA nach WL).

Die Biegefestigkeit der so hergestellten Fischer-Riegel wird im trockenen Zustand bei 23 °C Prüfkörpertemperatur in einem Festigkeitsprüfapparat Typ PFG mit der Prüfvorrichtung PBV (Fa. Georg Fischer, Schaffhausen/CH) bestimmt (in Tabelle BF nach WL).

1. Vergleichsversuche ohne Silan

| Versuch | Silan | Menge [%] | EP | Bindemittel Menge [%] | WA n. WL Gew.-% | BF n. WL N/cm$^2$ | Bemerkung |
|---|---|---|---|---|---|---|---|
| 1 | ohne | | EP 1 | 3 | 13 | 60 | Härtung 2h, 170°C |
| 2 | ohne | | EP 1 | 5 | 13 | 70 | Härtung 2h, 170°C |
| 3 | ohne | | EP 2 | 5 | 13 | 70 | Härtung 2h, 170°C |
| 4 | ohne | | EP 3 | 5 | n.b. | zerfallen | Härtung 2h, 170°C |

2. Versuche mit Silan bei der Emulsionspolymerisation: Variation der Silanmenge und Silantyp

| Versuch | Silan | Menge [%] | EP | Bindemittel Menge [%] | WA n. WL | BF n. WL | Bemerkung |
|---|---|---|---|---|---|---|---|
| 1 | gamma-Aminopropyltrimethoxysilan | 2 | EP 1 | 5 | 18 | 475 | Härtung 2h, 170°C |
| 2 | gamma-Aminopropyltrimethoxysilan | 4 | EP 2 | 5 | 11 | 820 | Härtung 2h, 170°C |
| 3 | gamma-Aminopropyltrimethoxysilan | 6 | EP 1 | 5 | 10 | 960 | Härtung 2h, 170°C |
| 4 | gamma-Aminopropyltrimethoxysilan | 10 | EP 2 | 5 | 10 | 880 | Härtung 2h, 170°C |
| 5 | Mercaptopropyltrimethoxysilan | 2 | EP 1 | 5 | 13 | 615 | Härtung 2h, 170°C |

3. nachträgliche Abmischung mit Silanen (zum Vergleich)

a) Variation von Silanen

| Versuch | Silan | Menge [%] | EP | Bindemittel Menge [%] | WA n. WL | BF n. WL | Bemerkung |
|---|---|---|---|---|---|---|---|
| 1 | Octyltriethoxy-silan | 1 | EP 1 | 5 | 8 | 525 | Härtung 2h, 170°C |
| 2 | Methyltrimethoxysilan | 1 | EP 2 | 5 | 6 | 645 | Härtung 2h, 170°C |
| 3 | beta-(3,4-Epoxycyclo-hexyl)-ethyltrimeth-oxysilan | 1 | EP 1 | 5 | 12 | 700 | Härtung 2h, 170°C |
| 4 | gamma-Aminopropyltri-methoxysilan | 1 | EP 1 | 5 | 10 | 970 | Härtung 2h, 170°C |
| 5 | N-(beta-Amino-ethyl)-gamma-amino-propyltrimeth-oxysi-lan | 1 | EP 2 | 5 | 14 | 670 | Härtung 2h, 170°C |
| 6 | Triaminoorganofunc-tional silane | 1 | EP 1 | 5 | 11 | 810 | Härtung 2h, 170°C |
| 7 | gamma-Isicyanatopro-pyltriethoxysilan | 1 | EP 2 | 5 | 19 | 560 | Härtung 2h, 170°C |

b) Variation der Silanmenge

| Versuch | Silan | Menge [%] | EP | Bindemittel Menge [%] | WA n. WL | BF n. WL | Bemerkung |
|---|---|---|---|---|---|---|---|
| 1 | gamma-Aminopropyltrimethoxysilan | 1 | EP 1 | 3 | 18 | 680 | Härtung 2h, 170°C |
| 2 | gamma-Aminopropyltrimethoxysilan | 1 | EP 1 | 5 | 13 | 790 | Härtung 2h, 170°C |
| 3 | gamma-Aminopropyltrimethoxysilan | 5 | EP 1 | 3 | 8 | 830 | Härtung 2h, 170°C |
| 4 | gamma-Aminopropyltrimethoxysilan | 5 | EP 1 | 5 | 6 | 1250 | Härtung 2h, 170°C |
| | | | | | | | |
| 7 | gamma-Aminopropyltrimethoxysilan | 2 | EP 2 | 5 | 9 | 980 | Härtung 2h, 170°C |
| 8 | gamma-Aminopropyltrimethoxysilan | 4 | EP 2 | 5 | 9 | 920 | Härtung 2h, 170°C |
| | | | | | | | |
| 11 | gamma-Aminopropyltrimethoxysilan | 2 | EP 3 | 5 | 17 | 130 | Härtung 2h, 170°C |
| 12 | gamma-Aminopropyltrimethoxysilan | 4 | EP 3 | 5 | 18 | 160 | Härtung 2h, 170°C |

c) Variation der Silanmenge und der Härtungstemperatur

| Versuch | Silan | Menge [%] | Acrodur | Bindemittel Menge [%] | WA n. WL | BF n. WL | Bemerkung |
|---|---|---|---|---|---|---|---|
| 1 | gamma-Aminopropyltrimethoxysilan | ohne | EP 1 | 3 | 22 | 20 | Härtung 2h, 130°C |
| 2 | gamma-Aminopropyltrimethoxysilan | 1 | EP 1 | 3 | 22 | 110 | Härtung 2h, 130°C |
| 3 | gamma-Aminopropyltrimethoxysilan | 2 | EP 1 | 3 | 22 | 105 | Härtung 2h, 130°C |
| | | | | | | | |
| 4 | gamma-Aminopropyltrimethoxysilan | ohne | EP 1 | 3 | 16 | 60 | Härtung 2h, 150°C |
| 5 | gamma-Aminopropyltrimethoxysilan | 1 | EP 1 | 3 | 18 | 360 | Härtung 2h, 150°C |
| 6 | gamma-Aminopropyltrimethoxysilan | 2 | EP 1 | 3 | 19 | 360 | Härtung 2h, 150°C |

## Patentansprüche

1. Verfahren zur Herstellung einer wäßrigen Polymerdispersion, enthaltend

   - ein Emulsionspolymerisat (kurz EP)
   - ein Polymerisat, welches zu mindestens 5 Gew.-% aus einer ethylenisch ungesättigten Monocarbonsäure, Dicarbonsäure oder Dicarbonsäureanhydrid aufgebaut ist (kurz Säurepolymer SP) und
   - ein Alkoxysilan der Formel

   $$SiR^1R^2R^3R^4$$

   worin die Gruppen $R^1$ bis $R^4$ unabhängig voneinander für einen organischen Rest stehen, mit der Maßgabe, dass mindestens eine der Gruppen für eine Alkoxygruppe steht, **dadurch gekennzeichnet, dass** die Herstellung des Emulsionspolymerisats durch Emulsionspolymerisation in Gegenwart zumindest eines Teils des Alkoxysilans erfolgt.

2. Verfahren gemäß Anspruch 1, **dadurch gekennzeichnet, dass** Alkoxysilan zugesetzt wird, bevor 70 Gew.-% der Monomeren aus denen das Emulsionspolymerisat aufgebaut ist, polymerisiert sind.

3. Verfahren gemäß Anspruch 1 oder 2, **dadurch gekennzeichnet, dass** das Emulsionspolymerisat zu mindestens 40 Gew.-% aus sogenannten Hauptmonomeren, ausgewählt aus $C_1$- bis $C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren aufgebaut ist.

4. Verfahren gemäß einem der Ansprüche 1 bis 3, **dadurch gekennzeichnet, dass** die Emulsionspolymerisation in Gegenwart zumindest eines Teils des Säurepolymeren erfolgt.

5. Verfahren gemäß Anspruch 4, **dadurch gekennzeichnet, dass** das Säurepolymere aufgebaut ist aus

   - 50 bis 99,5 Gew.-% mindestens einer ethylenisch ungesättigten Mono- oder Dicarbonsäure eines Dicarbonsäureanhydrids oder deren Mischungen,
   - 0,5 bis 50 Gew.-% wenigstens einer ethylenisch ungesättigten Verbindung, die ausgewählt ist aus den Estern ethylenisch ungesättigter Monocarbonsäuren und den Halbestern und Diestern ethylenisch ungesättigter Dicarbonsäuren mit einem mindestens eine Hydroxylgruppe aufweisenden Amin und
   - gegebenenfalls bis zu 20 Gew.-% mindestens eines weiteren Monomeren.

6. Verfahren gemäß einem der Ansprüche 1 bis 5, **dadurch gekennzeichnet, dass** die wäßrige Polymerdispersion zusätzlich ein Polyol oder Alkanolamin mit mindestens zwei Hydroxylgruppen enthält.

7. Wäßrige Polymerdisperion, erhältlich nach dem Verfahren gemäß den Ansprüchen 1 bis 6.

8. Verwendung der wäßrigen Polymerdispersion gemäß Anspruch 7 als Bindemittel für Formkörper oder Vliese aus faserigen oder körnigen Materialien, die insbesondere ausgewählt sind aus Glasfasern, Holzfasern, Textilfasern, Mineralfasern, Holzschnitzeln oder Holzspänen, Korkschnitzeln oder Sand.

Europäisches Patentamt

# EUROPÄISCHER RECHERCHENBERICHT

Nummer der Anmeldung
EP 02 00 7981

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | US 6 071 994 A (KISTENMACHER AXEL ET AL) 6. Juni 2000 (2000-06-06) * das ganze Dokument * | 1 | C08F220/18 C08F265/02 C08F2/44 |
| A,D | DE 199 49 592 A (BASF AG) 19. April 2001 (2001-04-19) * das ganze Dokument * | 1 | |
| A | US 5 830 934 A (KRISHNAN VENKATARAM) 3. November 1998 (1998-11-03) * das ganze Dokument * | 1 | |
| A | EP 0 278 523 A (CANON KK) 17. August 1988 (1988-08-17) * das ganze Dokument * | 1 | |

RECHERCHIERTE SACHGEBIETE (Int.Cl.7)
C08F

Der vorliegende Recherchenbericht wurde für alle Patentansprüche erstellt

| Recherchenort | Abschlußdatum der Recherche | Prüfer |
|---|---|---|
| DEN HAAG | 1. Oktober 2002 | Meulemans, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 02 00 7981

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-10-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 6071994 | A | 06-06-2000 | DE | 19606394 A1 | 28-08-1997 |
| | | | AT | 185352 T | 15-10-1999 |
| | | | AU | 706941 B2 | 01-07-1999 |
| | | | AU | 1792097 A | 10-09-1997 |
| | | | BR | 9707571 A | 27-07-1999 |
| | | | CA | 2247312 A1 | 28-08-1997 |
| | | | CN | 1211260 A | 17-03-1999 |
| | | | DE | 59700528 D1 | 11-11-1999 |
| | | | WO | 9731036 A1 | 28-08-1997 |
| | | | EP | 0882074 A1 | 09-12-1998 |
| | | | ES | 2138858 T3 | 16-01-2000 |
| | | | JP | 2000506940 T | 06-06-2000 |
| | | | DK | 882074 T3 | 27-12-1999 |
| DE 19949592 | A | 19-04-2001 | DE | 19949592 A1 | 19-04-2001 |
| | | | BR | 0014703 A | 18-06-2002 |
| | | | WO | 0127163 A1 | 19-04-2001 |
| | | | EP | 1240205 A1 | 18-09-2002 |
| US 5830934 | A | 03-11-1998 | AU | 711494 B2 | 14-10-1999 |
| | | | AU | 7595096 A | 15-05-1997 |
| | | | BR | 9611411 A | 05-01-1999 |
| | | | CA | 2232339 A1 | 01-05-1997 |
| | | | EP | 0857181 A1 | 12-08-1998 |
| | | | JP | 11514407 T | 07-12-1999 |
| | | | WO | 9715603 A1 | 01-05-1997 |
| | | | US | 6130287 A | 10-10-2000 |
| EP 0278523 | A | 17-08-1988 | JP | 2088210 C | 02-09-1996 |
| | | | JP | 7117773 B | 18-12-1995 |
| | | | JP | 63198071 A | 16-08-1988 |
| | | | DE | 3886061 D1 | 20-01-1994 |
| | | | DE | 3886061 T2 | 11-05-1994 |
| | | | EP | 0278523 A2 | 17-08-1988 |
| | | | HK | 75094 A | 05-08-1994 |
| | | | US | 4816366 A | 28-03-1989 |

EPO FORM P0461

Für nähere Einzelheiten zu diesem Anhang : siehe Amtsblatt des Europäischen Patentamts, Nr.12/82